Europäisches Patentamt

(19) European Patent Office

Office européen des brevets

(11) Numéro de publication : **0 044 248**
**B1**

(12) # FASCICULE DE BREVET EUROPÉEN

(45) Date de publication du fascicule du brevet :
**10.09.86**

(21) Numéro de dépôt : **81401090.6**

(22) Date de dépôt : **07.07.81**

(51) Int. Cl.⁴ : **F 25 B 25/00**, F 25 B 49/00,
F 25 B 5/00, F 25 D 11/02

(54) **Ensemble frigorifique à compartiments à températures différentes.**

(30) Priorité : **11.07.80 FR 8015495**

(43) Date de publication de la demande :
**20.01.82 Bulletin 82/03**

(45) Mention de la délivrance du brevet :
**10.09.86 Bulletin 86/37**

(84) Etats contractants désignés :
**AT BE CH DE FR GB IT LI NL SE**

(56) Documents cités :
DE-A- 1 451 014
DE-A- 2 216 482
DE-A- 2 433 331
DE-B- 1 122 968
FR-A- 2 247 684
FR-A- 2 301 790
FR-A- 2 323 966
FR-A- 2 382 658
GB-A-  657 376
US-A- 1 985 252
US-A- 2 133 964
US-A- 2 235 995
US-A- 2 416 777
US-A- 2 511 851
US-A- 2 640 327
US-A- 2 687 020
US-A- 2 705 876
US-A- 2 920 463
US-A- 3 197 975

(73) Titulaire : **SELNOR SOCIETE D'ELECTROMENAGER
DU NORD**
**B.P. 105**
**F-59811 Lesquin Cedex (FR)**

(72) Inventeur : **Quesnoit, Jaques**
**THOMSON-CSF SCPI - 173, bld Haussmann**
**F-75360 Paris Cedex 08 (FR)**

(74) Mandataire : **Phan, Chi Quy et al**
**THOMSON-CSF SCPI 19, avenue de Messine**
**F-75008 Paris (FR)**

## Description

La présente invention concerne un ensemble frigorifique à compartiments à températures différentes.

Cet ensemble frigorifique se présente habituellement sous forme d'un réfrigérateur, d'un congélateur, d'un meuble frigorifique ou d'une chambre frigorifique. Le cas le plus fréquemment rencontré est un ensemble frigorifique sous forme d'un réfrigérateur à deux compartiments maintenus respectivement à des températures relativement constantes par deux évaporateurs à températures différentes. L'un de ces compartiments est appelé compartiment de réfrigération, généralement maintenu à + 5 °C environ, et l'autre est un compartiment de congélation maintenu à — 18 °C approximativement.

La plupart des réfrigérateurs connus de ce type fonctionnent avec un seul compresseur assurant le refroidissement de deux évaporateurs mis en série dans le circuit. La répartition du froid entre les deux compartiments est, dans ce cas, fixée par construction et ne peut donc s'adapter exactement aux besoins. La répartition des besoins entre les compartiments varie en effet d'une part en fonction de l'usage (ouvertures de porte, introduction de produits à refroidir ou à congeler) et d'autre part en fonction de la température ambiante. Lorsque la température ambiante se refroidit, on ne fait plus assez de froid dans le compartiment basse température et on n'obtient donc plus le — 18° requis. Pour y parvenir on peut soit réchauffer le compartiment réfrigérateur au moyen d'une résistance, soit prévoir des compartiments équilibrés correctement aux températures respectives de — 18 °C et + 5 °C par exemple à la température ambiante la plus basse de + 16 °C par exemple mais alors à la température ambiante la plus élevée de + 32 °C par exemple, on aura des températures respectives de — 23 °C et 5 °C. Ces deux solutions (résistance ou balance thermique plus froide) entraînent un surcroît de consommation d'énergie. De plus on n'obtient de performances satisfaisantes que dans une plage de température limitée, et pour des valeurs de volume du compartiment basse température limitées en valeur relative à environ 25 % du volume total et en valeur maximale à une capacité de l'ordre de 100 litres.

Egalement, on refroidit les deux compartiments en évaporant le fluide frigorigène à la température requise pour le compartiment le plus froid ce qui ne donne pas le meilleur rendement.

D'autres appareils sont équipés de deux compresseurs qui fournissent du froid respectivement à deux évaporateurs. Cette solution permet d'obtenir des performances satisfaisantes dans les deux compartiments indépendamment du rapport de leurs volumes et de donner à l'utilisateur la possibilité de régler séparément les deux compartiments. Mais cette solution s'avère nettement plus coûteuse. Ces appareils consomment au moins autant d'énergie que ceux du cas rappelé dans les paragraphes précédents car les pertes fixes de deux compresseurs bien qu'ils soient relativement plus petits doivent être additionnées.

De nombreuses solutions ont été envisagées pour assurer l'indépendance de fonctionnement de ces deux compartiments dans un appareil équipé avec un seul compresseur. La plupart de ces solutions utilisent une électro-vanne permettant d'arrêter le refroidissement d'un évaporateur, généralement celui du compartiment de réfrigération, tout en continuant de refroidir l'autre compartiment. Mais on n'obtient pas réellement l'indépendance de réglage et la stabilité des températures souhaitées car les conditions de fonctionnement du circuit frigorifique sont très différentes selon que l'on assure le refroidissement d'un seul évaporateur ou des deux et même pour obtenir un résultat limité comparé à l'objectif recherché, on est amené à utiliser une régulation plus élaborée et sensiblement plus coûteuse.

Dans certaines autres solutions est utilisé un circuit secondaire pour le refroidissement du compartiment réfrigérateur. Ce circuit est en liaison thermique avec l'évaporateur du compartiment basse température. On commande l'échange dans ce circuit au moyen d'une électro-vanne ou d'un étranglement que l'on réchauffe lorsque l'on veut arrêter la circulation du fluide.

Ces solutions ne permettent pas d'assurer dans un appareil l'indépendance réelle des compartiments comme cela est obtenu avec deux compresseurs et deux circuits indépendants, indépendance qui permet essentiellement d'obtenir les températures nécessaires avec des réglages indépendants, et de mettre le compartiment basse température en marche continue pour sous-refroidir les produits en conservation, et améliorer la congélation.

De plus, l'appareil reste toujours dans l'obligation de fonctionner à une température d'évaporation correspondant aux besoins du compartiment le plus froid, donc avec un rendement thermodynamique médiocre.

Les inconvénients énumérés ci-dessus sont surtout sensibles pour les circuits frigorifiques utilisant un capillaire pour la détente du fluide entre la haute pression à la sortie du condenseur et la basse pression à l'entrée du ou des évaporateurs, cela provient du fait qu'un capillaire fonctionne avec un débit qui n'est pas interrompu mais variable en fonction des conditions existantes dans les côtés haute pression d'une part et basse pression d'autre part. Le capillaire a un effet auto-régulateur qui lui permet de s'adapter aux conditions diverses de fonctionnement rencontrées en usage pratique. Ceci joint à sa simplicité et sa fiabilité a fait qu'il a prévalu dans la réfrigération domestique.

La présente invention ayant pour but d'éviter ces inconvénients permet de réaliser un ensemble frigorifique économique à compartiments à températures différentes avec réglages indépendants. Dans cet ensemble l'indépendance des sources de froid de chaque compartiment est obtenue grâce à un effet de valve thermique et l'indépendance des réglages des dispositifs de régulation par le fait que l'on fonctionne en alternat, c'est-à-dire en ne produisant de froid que pour un seul compartiment à la fois, ce qui permet de maintenir plus constante la température de chaque compartiment.

Dans un système à capillaire, cet effet ne peut être obtenu qu'avec le dispositif de l'invention utilisant un système comportant un circuit secondaire pour le refroidissement du compartiment le plus froid, faisant office de valve thermique et comportant une partie servant d'évaporateur située dans ce compartiment à refroidir et une partie servant de condenseur située dans l'échangeur en contact thermique avec un des évaporateurs du circuit primaire.

Par contre, l'utilisation de valves de détente régulées, soit par la température d'évaporation, soit par d'autres moyens permet d'obtenir plus facilement l'indépendance de plusieurs compartiments. Ces valves de détente permettant d'interrompre le débit du fluide, et en conséquence de faire fonctionner le circuit avec une réserve de liquide assurant une indépendance beaucoup plus complète des compartiments régulés chacun par une valve thermostatique comme cela est utilisé en réfrigération commerciale. Mais les valves de détente sont beaucoup trop coûteuses pour être utilisées en réfrigération domestique.

Il est connu du document US-A-2 511 851 un ensemble frigorifique à compartiments à températures différentes relativement constantes qui comprend un circuit frigorifique muni d'un seul motocompresseur, et possède un circuit primaire présentant au moins deux dispositifs d'évaporation. L'un d'eux refroidit directement un compartiment. Le second refroidit l'autre compartiment par l'intermédiaire d'un circuit secondaire à condenseur et à évaporateur dans lequel circule par gravité un fluide frigorifique assurant le transfert thermique du circuit primaire à ce compartiment. Ce dispositif d'évaporation du circuit primaire forme avec le condenseur du circuit secondaire un échangeur thermique, cet échangeur étant situé au-dessus de l'évaporateur de ce circuit secondaire et le transfert thermique ne peut se faire que dans un sens, ce qui donne un effet de valve thermique. Ce compartiment reçoit donc du froid du circuit primaire, mais seulement lorsque la température de celui-ci est inférieure à celle du compartiment, et reste isolé dans les autres cas.

Il est connu également des ensembles de ce genre possédant, en plus, un dispositif de blocage de la production du froid dans un compartiment. C'est le cas du dispositif décrit dans le document DE-A-1 451 014.

Cependant, ce dispositif ne fonctionne pas en alternat, c'est-à-dire qu'il ne produit pas systématiquement du froid dans un seul compartiment à la fois, ce qui réduit d'autant son rendement frigorifique. En effet, l'un de ses compartiments est refroidi par un système à valve thermique qui est mis en ou hors service grâce à une vanne, alors que l'autre compartiment est refroidi directement grâce à un évaporateur. Lorsque la valve thermique est en service, pour refroidir le compartiment associé, l'évaporateur de l'autre compartiment reste en circuit : il y a donc une production de froid dans les deux compartiments en même temps.

De plus, il est prévu un circuit annexe pour le retour du fluide vers le compresseur lorsque la valve thermique est hors circuit, lequel circuit est ouvert ou fermé par une seconde vanne. Cette structure est donc difficile à réaliser.

Le dispositif de l'invention ne présente pas ces inconvénients de mauvais rendement et de réalisation.

Selon l'invention un ensemble frigorifique à compartiments à températures différentes contrôlées par des dispositifs thermostatiques indépendants, refroidis par un circuit frigorifique du type à détente par capillaire et muni d'un seul motocompresseur, comprenant un circuit primaire du type à détente par capillaire ayant un premier dispositif d'évaporation fonctionnant en échange thermique destiné à refroidir un premier compartiment par l'intermédiaire d'un circuit secondaire à condenseur et à évaporateur dont le condenseur est en liaison thermique avec ce dispositif d'évaporation et dans lequel circule par gravité un fluide frigorifique, et dont l'évaporateur est situé dans le premier compartiment, ce qui par un effet de valve thermique assure un transfert thermique lorsque la température de ce dispositif d'évaporation est plus basse que celle du premier compartiment et empêche tout transfert thermique dans le cas contraire, et au moins un second dispositif d'évaporation sous forme d'un évaporateur destiné à refroidir au moins un second compartiment, et au moins un dispositif de blocage et de déblocage de la production frigorifique dans l'un des compartiments, est caractérisé en ce que le circuit secondaire est destiné à refroidir le premier compartiment auquel il est associé, à une température plus basse que celle obtenue dans le ou les seconds compartiments, auxquels est associé le second dispositif d'évaporation, et en ce que l'état bloqué du dispositif de blocage et de déblocage arrête la production de froid dans le ou les seconds compartiments à température plus haute et permet de ce fait la production de froid dans le premier compartiment à température plus basse, tandis que son état débloqué permet la production de froid dans le ou les seconds compartiments à température plus haute, ce qui arrête la production de froid dans le premier compartiment à température plus basse.

Par ailleurs, le dispositif d'évaporation du compartiment à température plus élevée est de grande surface, ce qui fait qu'il évapore à température relativement élevée. Lorsqu'il est en fonctionnement, on ne produit donc pas de froid dans le compartiment basse température qui ne peut recevoir du froid que lorsque l'autre évaporateur étant arrêté, la température d'évaporation s'abaisse suffisamment. On a donc un fonctionnement en alternat.

Pour mieux faire comprendre l'invention on décrit ci-après un certain nombre d'exemples de réalisation illustrés par des dessins ci-annexés dont

la figure 1 représente une vue schématique d'un premier exemple de réalisation d'un ensemble frigorifique de l'invention, sous forme d'un réfrigérateur à deux compartiments à deux températures,

la figure 2 représente une vue schématique d'un deuxième exemple de réalisation d'un ensemble frigorifique de l'invention, sous forme d'un réfrigérateur à deux compartiments à deux températures,

la figure 3 représente un schéma d'un circuit électrique de commande de régulation de températures des compartiments de l'ensemble frigorifique de l'exemple de la figure 1,

la figure 4 représente un schéma d'une première variante de circuit électrique de la figure 3,

la figure 5 représente un schéma d'une deuxième variante de circuit électrique de la figure 3,

la figure 6 représente un schéma d'une troisième variante de circuit électrique de la figure 3,

la figure 7 représente une vue schématique en plan de la partie du circuit frigorifique de l'ensemble frigorifique de la figure 1, se présentant sous forme d'un échangeur thermique,

la figure 8 représente à une autre échelle une vue schématique en coupe d'une partie de l'échangeur thermique de la figure 7,

la figure 9 représente une vue schématique en plan d'une variante de réalisation de l'échangeur thermique de la figure 7,

la figure 10 représente à une autre échelle une vue schématique en coupe d'une partie de l'échangeur thermique de la figure 9,

la figure 11 représente, à une autre échelle, une vue schématique en plan d'une variante de réalisation de l'échangeur thermique de la figure 7,

la figure 12 représente à une autre échelle une vue schématique en coupe suivant XII-XII d'une partie de l'échangeur thermique de la figure 11,

la figure 13 représente à une autre échelle une vue schématique en plan d'une autre variante de réalisation de l'échangeur thermique de la figure 7,

la figure 14 représente à une autre échelle une vue schématique en coupe suivant XIV-XIV d'une partie de l'échangeur thermique de la figure 13, et

la figure 15 représente à une autre échelle une vue schématique en coupe transversale d'une variante de réalisation de l'échangeur thermique de la figure 13.

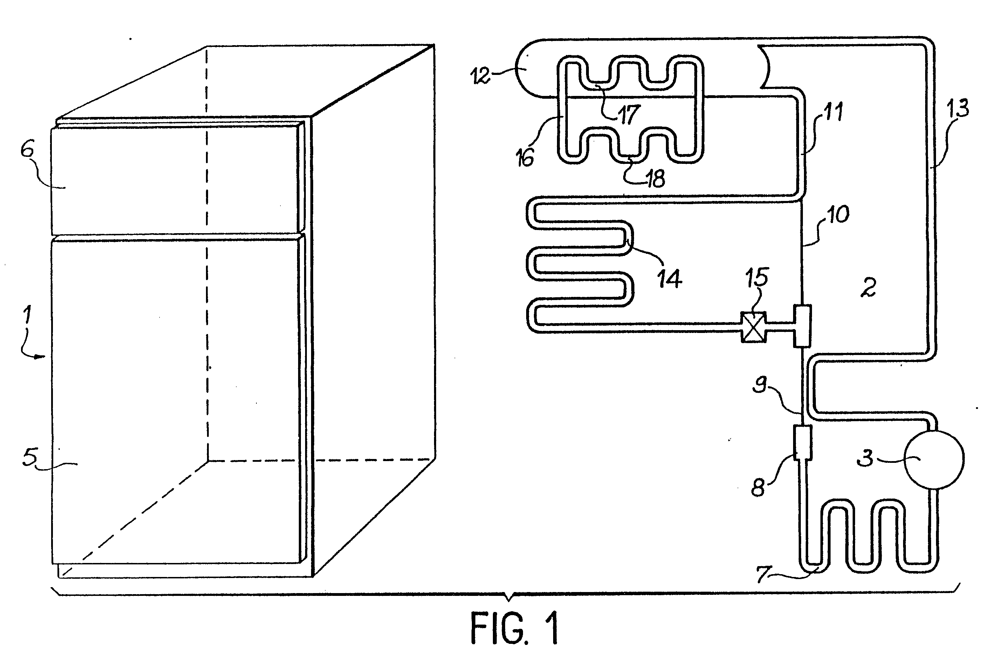

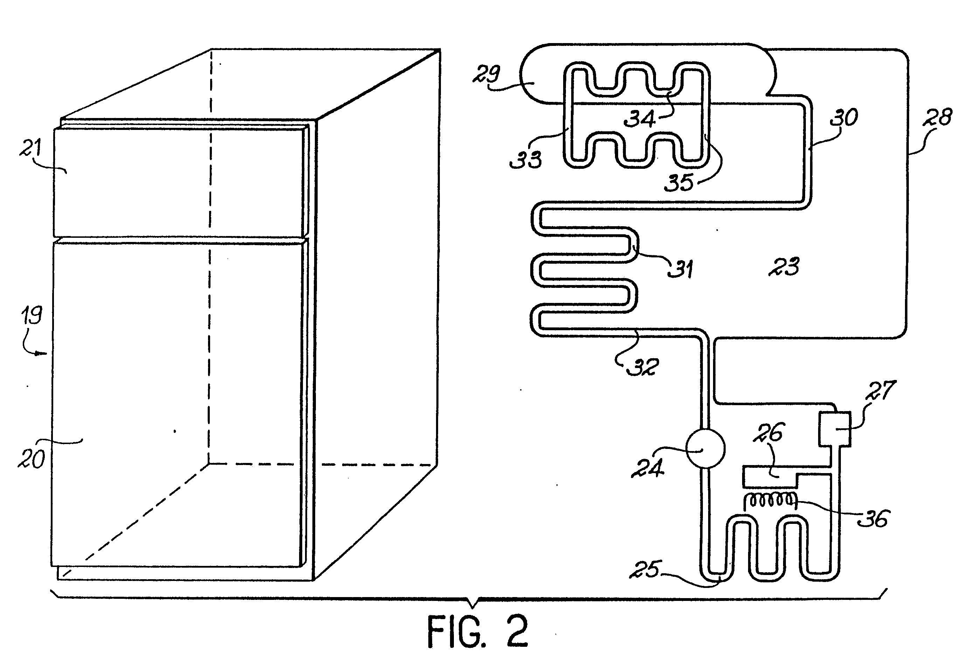

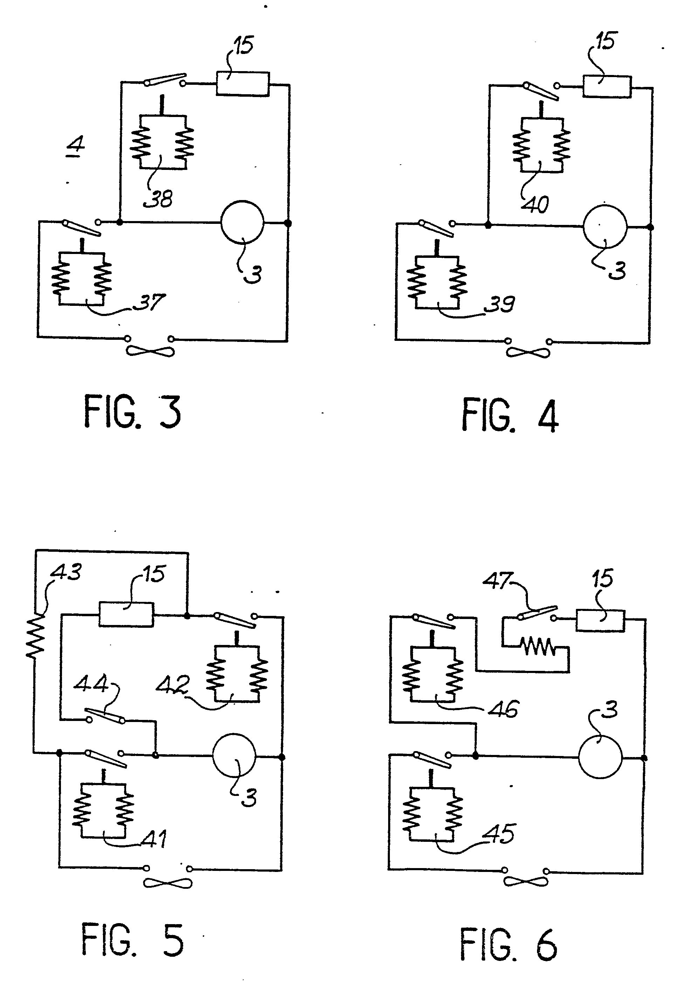

Un ensemble frigorifique 1 selon l'invention comprend plusieurs compartiments c'est-à-dire deux compartiments au moins à températures différentes. Des exemples d'un tel ensemble frigorifique à deux compartiments sont illustrés dans des figures 1 et 2. Dans un tel ensemble le maintien des températures des compartiments est effectué par un circuit frigorifique du type à capillaire équipé d'un seul motocompresseur 3 (figure 1) ou 24 (figure 2) et la régulation de températures des compartiments de manière à obtenir des valeurs relativement constantes est assurée par un circuit électrique 4 (figures 3 à 6). Le circuit frigorifique 2 ou 23 comprend au moins deux parties constituées par des circuits fermés distincts, renfermant des fluides frigorigènes, une première partie appelée circuit primaire, et une deuxième partie dite circuit secondaire. Le circuit primaire comprend plusieurs dispositifs d'évaporation. Le nombre de ces dispositifs d'évaporation correspond au nombre de compartiments de l'ensemble frigorifique 1 ou 19. Le circuit secondaire est constitué d'un serpentin distinct du circuit primaire et dont une partie joue le rôle d'un évaporateur et une partie servant de condenseur en contact d'échange thermique avec l'un de ces dispositifs d'évaporation du circuit primaire et constituant avec celui-ci un échangeur thermique. Le circuit secondaire renferme un fluide frigorigène, permettant d'assurer l'échange entre les deux parties de ce circuit secondaire. Le circuit secondaire fonctionne en circulation par gravité du fluide frigorigène et assure un transfert du froid de sa partie servant de condenseur en liaison thermique avec cet échangeur thermique à sa partie jouant le rôle d'un évaporateur disposé dans un des compartiments de l'ensemble frigorifique 1 ou 19. L'échangeur thermique est situé au-dessus de la partie du circuit secondaire jouant le rôle d'évaporateur. Lorsque l'échangeur thermique est plus froid que cette partie du circuit secondaire jouant le rôle d'évaporateur, les vapeurs de fluide frigorigène se trouvant dans la partie servant de condenseur du circuit secondaire en contact d'échange thermique avec cet échangeur thermique se condensent et le fluide frigorigène liquide formé redescend dans la partie du circuit secondaire jouant le rôle d'évaporateur où il s'évapore et donne du froid. Un transfert thermique est ainsi réalisé. Par contre lorsque la partie du circuit secondaire jouant le rôle d'évaporateur est plus froid que cet échangeur thermique, le fluide frigorigène liquide reste dans cette partie de ce circuit secondaire, la vapeur du fluide ayant une pression trop basse pour se condenser dans l'échangeur thermique. On a donc une valve thermique qui permet dans un ensemble frigorifique 1 ou 19, à un compartiment de recevoir des frigories sans les restituer à l'autre compartiment lorsque le fonctionnement est inversé. Dans le fonctionnement de cet ensemble frigorifique 1 ou 19, le circuit primaire du circuit frigorifique 2 ou 23 refroidit alternativement des dispositifs d'évaporation lesquels jouent chacun un rôle prédéterminé, soit celui d'un évaporateur directement soit celui fonctionnant en échange thermique avec un circuit secondaire. Le dispositif d'évaporation du circuit primaire et la partie du circuit secondaire, qui jouent le rôle d'un évaporateur, sont disposés respectivement dans les compartiments de l'ensemble frigorifique 1 ou 19 pour assurer leur refroidissement.

Dans l'exemple illustré dans la figure 1, l'ensemble frigorifique 1 comprend deux compartiments à températures différentes : un compartiment 5 à une température de l'ordre de + 5 °C appelé compartiment de réfrigération et un compartiment 6 à une température de l'ordre de — 18 °C appelé compartiment de congélation. Le circuit frigorifique 2 de cet ensemble frigorifique 1 comprend un circuit primaire ayant d'une part en série un motocompresseur 3, un condenseur 7, un filtre-déshydrateur 8, un capillaire principal 9, un capillaire auxiliaire 10, une conduite de liaison 11, un premier dispositif d'évaporation sous forme d'un réservoir fonctionnant en échange thermique 12 et une conduite 13 de retour au motocompresseur 3 et d'autre part à la sortie du capillaire principal 9, un deuxième dispositif d'évaporation se présentant sous la forme et jouant le rôle d'un évaporateur 14, monté en parallèle sur le capillaire auxiliaire 10, et un dispositif de blocage et de déblocage, de production frigorifique constitué par une électro-vanne 15 montée à l'entrée de ce deuxième dispositif d'évaporation. Le circuit frigorifique 2 comprend en outre un circuit secondaire 16 formant un circuit distinct du circuit primaire. Le circuit secondaire 16 comprend une partie 17 servant de condenseur fonctionnant en échange thermique avec le premier dispositif d'évaporation 12 du circuit primaire et formant avec ce dernier un échangeur thermique et une partie jouant le rôle d'un évaporateur 18 du compartiment de congélation 6.

Au cours du fonctionnement de l'ensemble frigorifique 1, lorsque l'électrovanne 15 du circuit primaire est ouverte, le fluide frigorigène liquide passe dans l'évaporateur 14 où il s'évapore à une température de — 10° à — 15 °C par exemple. Le fluide frigorigène liquide excédentaire s'il y en a, arrive à l'échangeur thermique 12-17, mais il ne peut transférer de frigories à l'évaporateur 18 car celui-ci est à une température plus basse de — 18 °C par exemple. Le débit dans le capillaire auxiliaire 10 est pratiquement nul, car la perte de charge qu'il occasionne est beaucoup plus importante que celle à travers l'évaporateur 14. La température d'évaporation de — 10° à — 15 °C dans l'évaporateur 14 résulte de l'équilibre thermique obtenu dans le compartiment réfrigérateur dont la température est normalement de + 5 °C avec un évaporateur échangeur 14 de grande surface ainsi que du débit du capillaire principal 9.

Lorsque l'électrovanne 15 est fermée, l'évaporateur 14 n'est plus alimenté et le fluide frigorigène liquide passe par le capillaire auxiliaire 10. Le circuit fonctionne donc avec les deux capillaires 9 et 10 en série, adaptés à une température d'évaporation plus basse que lorsque l'on a le freinage du seul capillaire 9. On obtient ainsi, une température d'évaporation de — 25 °C par exemple, dans l'échangeur thermique 12-17 qui permet de refroidir le compartiment de congélation à — 18 °C par exemple, au moyen du circuit secondaire 16 et de son évaporateur 18.

On voit donc que dans l'ensemble frigorifique illustré, le fonctionnement peut être ainsi intégralement en alternat pour produire du froid dans chaque évaporateur à une température d'évaporation optimale pour ses caractéristiques propres de fonctionnement, le réglage de chaque compartiment peut être fait sans influer sensiblement sur le réglage de l'autre, le compresseur peut être mis en marche continue en fournissant le maximum de froid dans le compartiment de congélation, tout en maintenant une température convenable et réglable dans l'autre compartiment. On peut aussi arrêter le compartiment le moins froid et faire fonctionner l'autre à une température désirée.

Pour que l'économie d'énergie obtenue grâce au fonctionnement en alternat à des températures d'évaporation différentes soit effective, il est nécessaire d'utiliser un échangeur thermique ayant un bon rendement. Selon l'invention, on utilise, d'une part, un circuit secondaire fonctionnant par évaporation condensation, ce qui permet d'obtenir à la fois des coefficients de transfert élevés et une bonne circulation du fluide en thermosyphon, et, d'autre part, un échangeur thermique ayant des surfaces internes importantes tant du côté secondaire que du côté primaire.

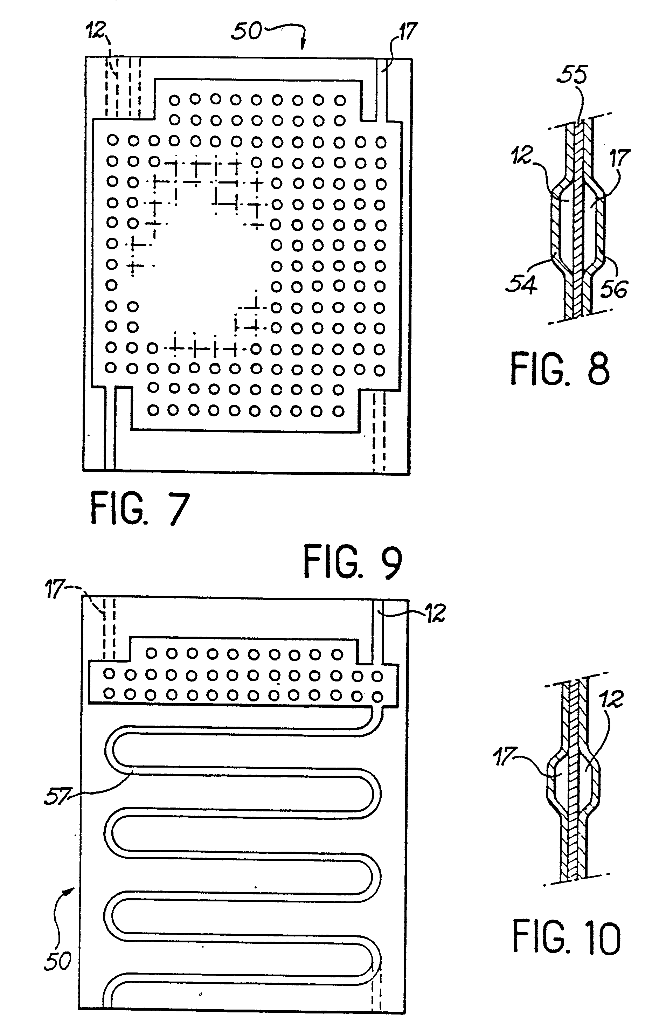

Ces caractéristiques sont obtenues dans des échangeurs thermiques réalisés conformément à l'invention et décrits ci-dessous à titre d'exemple. Un échangeur 50 illustré dans les figures 7 et 8 est constitué de deux circuits 12-17 accolés sur les deux faces opposées d'une plaque d'échange thermique 55. Cet échangeur 50 est formé de trois feuilles de métal 54, 55, 56, assemblées en sandwich, la feuille centrale 55 constituant la plaque d'échange, séparant les deux circuits 12 et 17, les feuilles extérieures 54, 56 ayant des formes permettant de constituer le dispositif d'évaporation fonctionnant en échange thermique et le condenseur 17 du circuit secondaire, entre chacune d'elles et la feuille centrale 55.

Ces circuits 12, 17 sont des circuits du type nid d'abeilles permettant d'obtenir une surface d'échange maximum, associée à une perte de charge minimum. Ces circuits 12, 17 sont disposés en regard l'un de l'autre afin de favoriser un meilleur échange thermique possible. Dans des variantes de réalisation dont l'une est illustrée dans les figures 9 et 10, les circuits 12, 17 comportent des canaux de circulation 57 en tout ou partie de la surface de l'échangeur, ces circuits 12, 17 restant symétriques par rapport à la plaque d'échange 55, donc en regard ou plus ou moins décalés, le dispositif d'évaporation 12 pouvant comporter des canaux 57 et le condenseur 17 restant celui du type nid d'abeilles. L'illustration dans la figure 8 n'est donnée qu'à titre d'exemple non limitatif. L'échangeur 50 peut être également réalisé au moyen de deux plaques comportant chacune un circuit indépendant et qui sont ensuite assemblées mécaniquement pour établir un bon contact thermique entre elles.

L'échangeur 50 peut être réalisé selon différents procédés mais de préférence soit par un procédé connu sous le nom de Roll Bond soit un procédé connu sous le nom de Z-Bond. Le procédé Roll Bond consiste à souder par laminage des feuilles d'aluminium en superposition. Le soudage se réalise en dehors des endroits où a été déposée une encre spéciale.

Après l'opération de laminage, les circuits 12, 17 sont gonflés au moyen d'un liquide à haute pression qui forme les circuits en écartant les feuilles aux endroits où elles n'ont pas été soudées.

Le procédé Z-Bond consiste à souder entre elles des feuilles d'aluminium préalablement revêtues, par laminage, d'une mince feuille de zinc. Les formes des circuits 12, 17 sont obtenues par emboutissage de ces feuilles qui sont ensuite assemblées au moyen d'une presse comportant des plateaux chauffants ayant la forme des circuits 12, 17, la chaleur permettant de faire fondre le zinc et d'obtenir une soudure après refroidissement. Dans une variante, l'échangeur 50 peut être réalisé au moyen de feuilles d'acier ou d'autre métal, embouties préalablement et assemblées entre elles en utilisant le procédé de soudage par résistance, soit par point, soit à la molette lorsqu'une soudure linéaire est nécessaire comme par exemple pour la périphérie des circuits. On peut aussi utiliser une soudure à la torche qui assemble les trois feuilles entre elles par fusion des tranches.

Dans une autre variante, les feuilles de métal de l'échangeur 50 peuvent être assemblées entre elles par brasure, ces feuilles étant préalablement revêtues d'une mince pellicule de cuivre et chauffées dans leur ensemble.

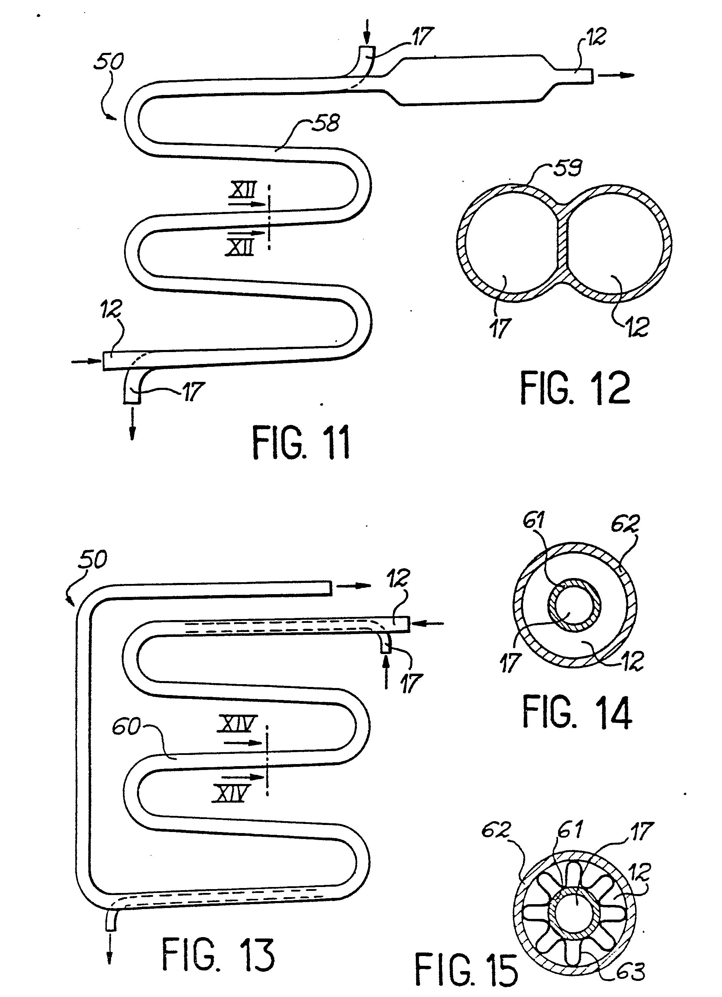

Selon une autre variante illustrée dans les figures 11 et 12, l'échangeur 50 est constitué par un serpentin 58 formé à partir d'un tube jumelé 59 plié en accordéon. Ce tube jumelé 59 constitue les deux circuits 12, 17 pour le fluide frigorifique. Ce tube jumelé 59 peut être par exemple réalisé en aluminium extrudé.

Enfin l'échangeur 50 est, selon une autre variante de réalisation illustrée dans les figures 13, 14, 15, constitué par un serpentin 60 formé de deux tubes concentriques 61, 62 pliés en accordéon. Ces tubes concentriques 61, 62 constituent respectivement les deux circuits 12, 17 pour le fluide frigorifique. Ces tubes 61, 62 sont en aluminium ou un autre métal et se présentent soit sous une forme simple représentée dans la figure 14 soit sous une forme composite illustrée dans la figure 15. Dans leur forme composite, les tubes concentriques 61, 62 sont munis dans l'espace les séparant, d'ailettes internes 63.

Les échangeurs qui viennent d'être décrits peuvent également être utilisés pour la mise en œuvre du deuxième exemple de réalisation illustré dans la figure 2.

Dans ce deuxième exemple de réalisation de l'invention, l'ensemble frigorifique 19 comprend également deux compartiments à températures différentes : un compartiment 20 à une température de l'ordre de + 5 °C appelé compartiment de réfrigération, et un compartiment 21 à une température de l'ordre de — 18 °C, appelé compartiment de congélation. Le circuit frigorifique 23 de cet ensemble frigorifique 19 comprend un circuit primaire ayant en série, un motocompresseur 24, un condenseur 25, un dispositif de blocage et de déblocage de production frigorifique formé d'un réservoir piège à fluide frigorigène 26 branché en cul-de-sac à la sortie de ce condenseur, un filtre-déshydrateur 27, un capillaire 28, un premier dispositif d'évaporation sous forme d'un réservoir fonctionnant en échange thermique 29, une conduite de liaison 30, un deuxième dispositif d'évaporation se présentant sous forme et jouant le rôle d'un évaporateur 31 du compartiment de réfrigération 20 et une conduite 32 de retour au motocompresseur 24. Le circuit frigorifique 19 comprend en outre un circuit secondaire 33 formant un circuit distinct du circuit primaire. Le circuit secondaire 33 comprend une partie 34 servant de condenseur fonctionnant en échange thermique avec le premier dispositif d'évaporation du circuit primaire et formant avec ce dernier un échangeur thermique et une partie jouant le rôle d'un évaporateur refroidisseur 35 du compartiment de congélation 21.

Le réservoir-piège 26 occupe un emplacement qui lui permet de se soustraire à l'influence thermique du condenseur 25 et de descendre rapidement à une température proche de la température ambiante. Le réservoir-piège 26 est muni d'une résistance chauffante électrique 36. Quand cette résistance 36 n'est pas sous tension le réservoir-piège 26 se remplit normalement de fluide frigorigène liquide venant du condenseur 25. Le réservoir-piège 26 et sa résistance chauffante 36 constituent un dispositif de blocage.

Le circuit primaire du circuit frigorifique 23 est rempli de fluide frigorigène d'une quantité telle que, la résistance électrique chauffante 36 étant hors tension, il existe une quantité de fluide frigorigène suffisante pour le dispositif d'évaporation faisant partie de l'échangeur thermique 29-34 mais nettement insuffisant pour le deuxième dispositif d'évaporation jouant le rôle d'évaporateur 31.

Il en résulte que dans le circuit frigorifique 23 de l'ensemble frigorifique 19, lorsque le réservoir-piège 26 n'est pas réchauffé, il n'y a pas assez de fluide frigorigène liquide au deuxième dispositif d'évaporation jouant le rôle d'évaporateur 31, le froid est produit seulement dans l'échangeur thermique 29-34 où, le circuit secondaire présentant une charge thermique plus faible, l'évaporation du fluide frigorigène s'effectue à — 25 °C par exemple. Le transfert du froid est réalisé par le circuit secondaire 33 à travers sa partie servant d'évaporateur 35 dans le compartiment de congélation 21. Lorsqu'on chauffe le réservoir-piège 26 on en chasse le fluide frigorigène et il y a alors assez de fluide dans le circuit primaire pour alimenter le deuxième dispositif d'évaporation servant d'évaporateur 31. Comme ce dernier a une charge thermique relativement plus importante, la température d'évaporation est nettement plus élevée. Il en résulte qu'il n'y a plus de transfert de froid à travers l'échangeur thermique 29-34 au circuit secondaire 33 et à l'évaporateur du compartiment basse température 21 qui est à une température inférieure à la température d'évaporation, — 20 °C par exemple.

Selon l'invention, le circuit frigorifique 2 ou 23 comprend dans son circuit primaire deux dispositifs d'évaporation. En régime établi, le dispositif d'évaporation 14 ou 31 du compartiment à + 5 °C évapore à une température plus élevée de — 10 °C à — 15 °C par exemple, le dispositif d'évaporation fonctionnant en échange thermique 12 ou 29 évapore à une température plus basse de — 20 °C à — 30 °C par exemple. Le circuit secondaire 16 ou 33 évapore à une température de — 15 °C à — 25 °C par exemple.

Dans l'ensemble frigorifique de l'invention, le circuit frigorifique comprenant un circuit primaire à plusieurs dispositifs d'évaporation qui fonctionnent soit directement en évaporateur soit en échange thermique, et un circuit secondaire en liaison d'échange thermique, avec l'un de ces dispositifs d'évaporation fonctionnant en échange thermique, peut comprendre dans son circuit primaire, tout autre système permettant d'alterner la production du froid dans ces dispositifs d'évaporation que ce réservoir piège 26 (figure 2) ou cette électrovanne 15 (figure 1) tel qu'un étranglement muni d'un moyen de chauffage.

Dans l'ensemble frigorifique de l'invention le fonctionnement en alternat de la production du froid par ce circuit frigorifique est réglé au moyen de thermostats pour maintenir d'une manière relativement constante les températures des compartiments.

Dans le cas d'un ensemble frigorifique 1 ou 19 à deux compartiments de l'exemple illustré dans la figure 1 ou figure 2, la régulation des températures de ces deux compartiments peut être effectuée au moyen de deux thermostats dont les éléments sensibles sont en contact thermique respectivement avec les évaporateurs de ces compartiments. Un circuit électrique 4 de commande de l'alternat de production de froid dans les compartiments de l'ensemble frigorifique 1 est schématiquement illustré comme exemple dans le figure 3. Ce circuit électrique comprend deux parties. La première partie de ce circuit comprend un thermostat 37 monté en série avec le motocompresseur 3 aux bornes d'une source électrique et dont l'élément sensible non présenté est en contact thermique intime avec l'évaporateur du compartiment de réfrigération. La deuxième partie de ce circuit comprend un ensemble ayant en série une électrovanne 15 à ouverture c'est-à-dire ouverte quand elle est sous tension et un thermostat 38, monté en parallèle aux bornes du motocompresseur 3 et dont l'élément sensible non représenté est en contact intime thermique avec l'évaporateur 18 du compartiment de congélation 6.

Le thermostat 37 est un thermostat du type à fermeture c'est-à-dire que les contacts électriques sont fermés par la pression du soufflet et à température de réenclenchement constante de + 3 °C à + 5 °C par exemple qui ne remet le motocompresseur 3 en route que lorsque l'évaporateur 14 est dégivré, ce qui assure le dévigrage cyclique et donc automatique dudit évaporateur 14.

Ce thermostat 37 commande également la deuxième partie du circuit 4 comprenant en série, le thermostat 38 et l'électro-vanne 15, le thermostat 38 étant du type à ouverture, c'est-à-dire, que les contacts électriques sont ouverts par la pression du soufflet et que par conséquent le thermostat 38 ferme les contacts quand la température prédéterminée du compartiment 6 est atteinte mettant en circuit l'électro-vanne 15 qui s'ouvre permettant l'entrée du fluide frigorigène liquide dans l'évaporateur 14 du compartiment réfrigération 5. C'est une régulation croisée. Le compartiment de congélation 6 est prioritaire et appelle la production de froid jusqu'à ce qu'il soit satisfait. Ensuite, il ferme le circuit de l'électrovanne 15, ce qui amène la production de froid dans le compartiment de réfrigération 5. Lorsque celui-ci est satisfait, le thermostat 37 coupe et arrête le motocompresseur 3. Le dégivrage s'effectue comme dans un appareil classique. Dans l'ensemble frigorifique 1 illustré, il n'est pas besoin de résistance assurant la compensation de la balance thermique qui est déjà rappelé dans un paragraphe précédent, les deux thermostats permettant de l'obtenir automatiquement.

Lorsque le dégivrage est terminé, le thermostat 37 remet en route le motocompresseur 3. Pendant ce temps, normalement le thermostat 38 s'est aussi réchauffé et a refermé l'électro-vanne 15.

Le froid est alors produit au profit du compartiment de congélation 6 et le cycle reprend comme dit ci-dessus. Si le thermostat 38 n'avait pas encore refermé l'électrovanne 15, on commencerait par produire du froid dans le compartiment de réfrigération 5 et on passerait au compartiment de congélation 6 aussitôt que le thermostat 38 appellerait du froid, pour revenir ensuite, au compartiment de réfrigération 5.

Lors de la mise en route initiale de l'ensemble frigorifique 1, on commence par refroidir le compartiment de congélation 6 et ensuite celui de réfrigération 5.

Cette régulation relativement simple, est adaptée aux ensembles à deux compartiments dont le volume du compartiment de congélation est limité à environ un tiers du volume total des deux compartiments. En effet, le compartiment de congélation étant prioritaire, on ne peut admettre qu'en cas de surcharge importante, il accapare toute la production de froid au détriment de l'autre compartiment. Ce circuit de commande de régulation 4 a l'avantage de la simplicité, mais ne permet pas d'arrêter le compartiment de réfrigération ni de mettre en marche continue au profit du congélateur. Mais il a tous les avantages de la régulation indépendante des compartiments, de l'économie d'énergie et on peut sous-refroidir le compartiment basse température en poussant le thermostat 38 et obtenir ainsi une température inférieure à — 18 °C, par exemple — 25 °C.

Une première variante de réalisation du circuit électrique de commande de la production de froid dans l'ensemble frigorifique 1 est schématiquement illustrée dans la figure 4. Dans cette première variante les thermostats sont inversés, par rapport à ceux de l'exemple de la figure 3. Le motocompresseur 3 est commandé par le thermostat 39 du compartiment de congélation, le thermostat 40 du compartiment de réfrigération est en série avec l'électro-vanne 15 qui est toujours à ouverture, par contre, ces deux thermostats sont du type à fermeture. Le dégivrage du compartiment de réfrigération est assuré de la même façon, le thermostat 40 étant à température de réenclenchement constante comme celui dans l'exemple de la figure 3.

Dans cette première variante de réalisation du circuit électrique, la régulation n'est plus croisée et la priorité est donnée au compartiment de réfrigération 5. On voit que le motocompresseur 3 démarre lorsque le compartiment de congélation 6 appelle du froid. Si le compartiment de réfrigération 5 appelle également du froid, le thermostat 40 est fermé, l'électrovanne 15 ouverte et le froid est produit dans le compartiment de réfrigération 5. Lorsque celui-ci est satisfait, le thermostat 40 s'ouvre, ferme l'électro-vanne 15 et le froid est produit dans le compartiment de congélation 6 jusqu'à ce que celui-ci soit satisfait.

En régime de conservation, où la charge thermique est normale, le motocompresseur 3 s'arrête alors et le cycle recommence.

En régime de congélation, la charge thermique du compartiment de congélation 6 peut prolonger le cycle et on pourra avoir un réenclenchement du thermostat 40 avant que le thermostat 39 ne déclenche.

De toute façon, on obtient le même résultat.

Cette première variante permet un réglage indépendant des compartiments 5 et 6 de l'ensemble frigorifique 1, une économie d'énergie, une possibilité de mettre le motocompresseur 3 en marche continue, ce qui assure le maximum de froid dans le compartiment de congélation pour accélérer la congélation, une possibilité de faire fonctionner le compartiment de congélation 6 seul. Cette variante reste simple et est adaptée aux ensembles à deux compartiments, qui ont un grand compartiment de congélation. Dans ce cas la priorité donnée au compartiment de réfrigération 5 ne risque pas d'entraîner la surcharge de celui-ci, car son volume est relativement limité par rapport au volume total des deux compartiments. Cette surcharge entraînerait, en effet, une absence de production frigorifique dans le compartiment de congélation pendant la période correspondante, ce qui est difficilement acceptable.

Une deuxième variante de réalisation du circuit électrique de commande de la production de froid dans l'ensemble frigorifique 1 est schématiquement illustrée dans la figure 5.

Cette deuxième variante a dans son circuit le même type de branchement que celui de la première variante, c'est-à-dire, qu'elle donne une priorité au compartiment de réfrigération. Cette deuxième variante comprend trois parties. La première partie comprend un thermostat 41 du compartiment de congélation 6 monté, en série avec le motocompresseur 3, aux bornes d'une source électrique. La deuxième partie comprend un ensemble ayant en série un thermostat 42 du compartiment de réfrigération, l'électrovanne 15 et un contact auxiliaire 44 du thermostat 41, monté en parallèle aux bornes du motocompresseur 3. Une troisième partie comprend une résistance chauffante 43 qui forme avec le thermostat 42 en série, un ensemble reliant les bornes de la source électrique. La résistance chauffante 43 est destinée, lors de sa mise sous tension, à réchauffer le bulbe du thermostat 41 du compartiment de congélation 6, ce qui permet d'activer la mise en route du motocompresseur 3 lorsque le thermostat 42 appelle du froid sans que le thermostat 41 le fasse, et donc d'éviter que le compartiment de réfrigération 5 reste trop longtemps arrêté lorsque le compartiment de congélation 6 est en cycle long.

Le contact auxiliaire 44 du thermostat 41 est un contact à ouverture et non à la fermeture comme le contact principal de ce thermostat, c'est-à-dire, qu'il ouvre le circuit lorsque le thermostat 41 se réchauffe au-delà de la température normale d'enclenchement du contact principal. L'ouverture du contact 44 coupe le circuit de l'électrovanne 15 et ramène donc la production du froid au compartiment de congélation 6.

On voit donc que le contact auxiliaire 44 redonne la priorité au compartiment de congélation lorsque celui-ci se réchauffe au-delà de sa température normale.

Lors d'une congélation importante, le contact auxiliaire 44 peut rester ouvert en début de congélation et ceci au détriment du compartiment de réfrigération.

Pour éviter cet inconvénient, on peut associer à l'interrupteur dont le contact met le motocompresseur en marche continue, en courtcircuitant le contact du thermostat 41, un deuxième contact qui courtcircuite le contact auxiliaire 44 et annule donc son effet. Ces deux contacts non représentés sont actionnés ensemble par l'utilisateur, lorsqu'il prévoit une opération de congélation.

En résumé dans la deuxième variante une résistance 43 a pour rôle d'activer le démarrage du motocompresseur 3 lorsque le thermostat 42 demande du froid sans que le thermostat 41 le fasse et un contact auxiliaire 44 sur le thermostat 41 du compartiment de congélation redonne la priorité à celui-ci lorsque sa température se réchauffe anormalement et limite donc les conséquences d'une surcharge de l'autre compartiment. Ces deux composants peuvent être associés selon le schéma de la figure 5 mais peuvent aussi être utilisés séparément selon les besoins, en fonction des caractéristiques relatives des deux compartiments associés.

Une troisième variante de réalisation du circuit électrique de commande de la production de froid dans l'ensemble frigorifique 1 est schématiquement illustrée dans la figure 6. Cette troisième variante fait l'objet d'une demande divisionnaire EP-A-0 125 944.

Cette troisième variante comprend deux parties. La première partie comprend un thermostat 45 du compartiment de congélation 6 monté en série avec le motocompresseur 3 aux bornes d'une source électrique. La deuxième partie comprend un ensemble ayant en série un thermostat 46 du compartiment de réfrigération 5, un cycleur 47 constitué par un interrupteur dont l'ouverture à effet retardé est commandée par le courant traversant ce cycleur, et l'électrovanne 15, monté en parallèle aux bornes du motocompresseur 3. Ce cycleur 47 peut être constitué par un interrupteur à bilame, à résistance chauffante parcourue par le courant traversant ce cycleur. La fonction du cycleur 47 est de limiter la priorité donnée au compartiment de réfrigération. Au lieu de le faire comme la variante 2, en se basant sur un réchauffement anormal du compartiment de congélation, on le fait en limitant volontairement le temps de marche effectué au profit du compartiment de réfrigération. Ceci est obtenu au moyen d'un cycleur 47 constitué par un interrupteur normalement fermé. Il comporte une bilame chauffée par une résistance traversée par le courant circulant dans le cycleur 47. Au bout d'un temps déterminé par les caractéristiques choisies de la bilame et de la résistance, le cycleur 47 coupe. Sa bilame se refroidit et referme le contact au bout d'un temps dépendant également des caractéristiques bilame-résistance.

Lorsque l'ensemble frigorifique 1 fonctionne normalement sans surcharge, le fonctionnement de la troisième variante est analogue à celui de la première variante ; la coupure effectuée par le thermostat 46 intervenant avant celle effectuée par le cycleur 47. Par contre, en cas de surcharge, le cycleur 47 intervient et répartit arbitrairement la production de froid entre les deux compartiments en fonction du rapport de marche fixé par les caractéristiques du cycleur 47. On évite donc par ce moyen les conséquences néfastes de la surcharge en abandonnant provisoirement la régulation indépendante et en repassant à une répartition arbitraire comme dans un réfrigérateur classique. Mais ceci est peu important, car il n'intervient qu'exceptionnellement.

Le cycleur 47 décrit, à fonctionnement thermique, convient bien pour cette application, car il revient automatiquement à sa position initiale lorsque le courant est coupé. Cependant des dispositifs à fonctions analogues à ce cycleur 47 tel qu'un interrupteur commandé par un dispositif de cyclage électronique ou tout autre moyen assurant le retour à l'état initial, peuvent être utilisés.

Dans le circuit électrique 4 et ses variantes, on comprend que les améliorations apportées à la première variante, celles concernant le problème de surcharge par exemple, et décrites dans les deuxième et troisième variantes, peuvent être appliquées au circuit 4. Le circuit électrique 4 et ses variantes illustrés comme exemples dans les figures 3 à 6 sont aussi applicables à la commande de l'alternat de production de froid dans les compartiments 20, 21 de l'ensemble frigorifique 19 (figure 2). Pour cet effet dans le circuit électrique 4 et ses variantes (figures 3 à 6) le dispositif de blocage représenté par l'électrovanne 15 est remplacé par celui représenté par le piège à fluide 26 et sa résistance électrique chauffante 36.

D'autres améliorations par exemple celles qui au moyen d'un commutateur non représenté manœuvré par l'utilisateur et permettant de passer du circuit 4 à la première variante selon les conditions d'utilisation, peuvent être également apportées à la commande du fonctionnement de l'ensemble frigorifique 1.

Les principales fonctions remplies par les deuxième et troisième variantes, c'est-à-dire le réglage indépendant de températures des compartiments, la marche accélérée du compartiment de congélation, la correction contre les surcharges thermiques temporaires, l'arrêt du compartiment de réfrigération seul, peuvent être également assurées par un dispositif électronique connu, comportant des sondes de températures, une dans chacun des compartiments de l'ensemble frigorifique 1. Ce dispositif électronique peut commander le démarrage du motocompresseur en fonction du besoin en froid de chacun des compartiments. Etant donné qu'un des compartiments peut appeler du froid alors que le motocompresseur vient d'être arrêté par l'autre compartiment, il est nécessaire dans ce cas d'adjoindre un dispositif retardateur de marche pour permettre l'équilibrage des pressions, ce qui est indispensable dans un circuit frigorifique à capillaire.

Ce dispositif électronique peut également assurer le fonctionnement avec des cycles plus courts, en égard aux impératifs de dégivrage du compartiment de réfrigération. Pour cela, il est bon de donner à la mise en marche du compresseur, la priorité au compartiment de réfrigération, la production de froid dans le compartiment basse température pouvant être assurée pendant que le réfrigérateur dégivre.

Ce dispositif électronique peut en outre assurer la répartition optimale des productions de froid entre les compartiments, en tenant compte des surcharges thermiques temporaires.

**Revendications**

1. Ensemble frigorifique à compartiments à températures différentes contrôlées par des dispositifs thermostatiques indépendants, refroidis par un circuit frigorifique (2, 23) du type à détente par capillaire et muni d'un seul motocompresseur (3, 24), comprenant un circuit primaire du type à détente par capillaire ayant un premier dispositif d'évaporation fonctionnant en échange thermique (12, 29) destiné à refroidir un premier compartiment (6, 21) par l'intermédiaire d'un circuit secondaire (16, 33) à condenseur (17, 34) et à évaporateur (18, 35) dont le condenseur (17, 34) est en liaison thermique avec ce dispositif d'évaporation (12, 29) et dans lequel circule par gravité un fluide frigorifique, et dont l'évaporateur (18, 35) est situé dans le premier compartiment, ce qui par un effet de valve thermique assure un transfert thermique lorsque la température de ce dispositif d'évaporation (12, 29) est plus basse que celle du premier compartiment (6, 21), et empêche tout transfert thermique dans le cas contraire, et au moins un second dispositif d'évaporation sous forme d'un évaporateur (14, 31), destiné à refroidir au moins un second compartiment (5, 20), et au moins un dispositif de blocage et de déblocage de la production frigorifique dans l'un des compartiments, caractérisé en ce que le circuit secondaire est destiné à refroidir le premier compartiment (6, 21), auquel il est associé, à une température plus basse que celle obtenue dans le ou les seconds compartiments (5, 20), auxquels est associé le second dispositif d'évaporation, et en ce que l'état bloqué du dispositif de blocage et de déblocage arrête la production de froid dans le ou les seconds compartiments à température plus haute et permet de ce fait la production de froid dans le premier compartiment à température plus basse, tandis que son état débloqué permet la production de froid dans le ou les seconds compartiments à température plus haute, ce qui arrête la production de froid dans le premier compartiment à température plus basse.

2. Ensemble selon la revendication 1, caractérisé en ce qu'il comprend plusieurs compartiments à températures plus hautes, (5, 20) pouvant être différentes entre elles, refroidis chacun par un dispositif d'évaporation (14, 31) comportant un dispositif de blocage et de déblocage de production de froid (15, 26-36).

3. Ensemble selon la revendication 1, ayant deux compartiments (5, 6) et dans lequel le circuit primaire du circuit frigorifique (2) est pourvu d'un motocompresseur (3), d'un condenseur (7) et d'un filtre-déshydrateur (8) montés en série, caractérisé en ce qu'il comprend dans le circuit primaire du circuit frigorifique (2) d'une part en série avec ces motocompresseur (3), condenseur (7) et filtre-déshydrateur (8), un capillaire principal (9), un capillaire auxiliaire (10), le premier dispositif d'évaporation (12) fonctionnant en échange thermique et destiné à refroidir le premier compartiment à température plus basse (6) et, d'autre part, en parallèle avec le capillaire auxiliaire (10), le second dispositif d'évaporation (14) délivrant du froid au second compartiment à température plus haute (5) et d'autre part un dispositif de blocage et de déblocage de production frigorifique sous forme d'une électrovanne (15) montée à l'entrée de ce second dispositif d'évaporation (14).

4. Ensemble selon la revendication 1, ayant deux compartiments (20, 21) et dans lequel le circuit primaire du circuit frigorifique (23) est pourvu d'un motocompresseur (24), d'un condenseur (25), d'un filtre-déshydrateur (27), d'un capillaire (28) montés en série, caractérisé en ce qu'il comprend dans le circuit primaire du circuit frigorifique (23) d'une part en série avec ces motocompresseur (24), condenseur (25), filtre-déshydrateur (27), capillaire (28), le premier dispositif d'évaporation (29) fonctionnant en échange thermique et destiné à refroidir le premier compartiment à température plus basse (21) de l'ensemble (19), et le second dispositif d'évaporation délivrant du froid au second compartiment à température plus haute (20), et d'autre part à la sortie du condenseur (25) et monté en cul-de-sac un dispositif de blocage et de déblocage de production frigorifique formé d'un réservoir-piège (26) muni d'une résistance chauffante (36).

5. Ensemble selon l'une des revendications 3 et 4, ayant deux compartiments maintenus respectivement à des températures différentes, à régulations indépendantes, caractérisé en ce qu'il comprend un circuit électrique de régulation commandant une production en alternat du froid dans ces compartiments et donnant une priorité de production de froid au compartiment le plus froid (6, 21) de cet ensemble (1, 19), et constitué de deux parties, une première partie ayant un thermostat (37) du compartiment le moins froid (5, 20), du type à fermeture et à température de réenclenchement constante, monté en série avec le motocompresseur (3, 24) aux bornes d'une source électrique et une deuxième partie formée d'un ensemble ayant en série le dispositif de blocage et de déblocage de production frigorifique (15, 26-36) et un thermostat (38) du compartiment le plus froid (6, 21) du type à ouverture, et monté en parallèle aux bornes de ce motocompresseur (3, 24).

6. Ensemble selon l'une des revendications 3 et 4, ayant deux compartiments maintenus respectivement à des températures différentes, à régulations indépendantes, caractérisé en ce qu'il comprend un circuit électrique de commande de régulation permettant une production en alternat du froid dans ces compartiments et donnant une priorité de production du froid au compartiment le moins froid (5, 20) de cet ensemble (1, 19) et constitué de deux parties, une première partie ayant un thermostat (39) du compartiment le plus froid (6, 21) du type à fermeture monté en série avec le motocompresseur (3, 24) aux bornes d'une source électrique, et une deuxième partie formée d'un ensemble, ayant en série le dispositif de blocage et de déblocage de production frigorifique (15, 26-36) et un thermostat (40) du compartiment le moins froid (5, 20), du type à fermeture, et monté en parallèle aux bornes de ce motocompresseur (3, 24).

7. Ensemble selon l'une des revendications 3 et 4, ayant deux compartiments maintenus respectivement à des températures différentes, à régulations indépendantes, caractérisé en ce qu'il comprend un circuit électrique de commande de régulation permettant une production en alternat du froid dans ces compartiments et donnant une priorité limitée au compartiment le moins froid (5, 20) de cet ensemble (1, 19) et constitué de trois parties, une première partie ayant un thermostat (41) du compartiment le plus froid (6, 21) du type à fermeture, monté en série avec le motocompresseur (3, 24) aux bornes d'une source électrique, une deuxième partie formée d'un ensemble, ayant en série un thermostat (42) du compartiment le moins froid (5, 20) du type à fermeture, le dispositif de blocage et de déblocage de production frigorifique (15, 26-36) et un contact auxiliaire (44) du type à ouverture de ce thermostat (41) du compartiment le plus froid (6, 21), monté en parallèle aux bornes du motocompresseur (3, 24), et une troisième partie formée d'un ensemble ayant en série le thermostat (42) du compartiment le moins froid (5, 20) et une résistance chauffante (43) du bulbe du thermostat (41) du compartiment le plus froid (6, 21), reliant les bornes de cette source électrique.

8. Ensemble selon la revendication 7, caractérisé en ce qu'il comprend dans le circuit électrique de commande de régulation, un interrupteur branché en parallèle aux bornes du contact auxiliaire (44) dont la commande est associée à la commande de mise en marche continue prévue pour l'opération de congélation.

9. Ensemble selon l'une des revendications 3 et 4, ayant deux compartiments maintenus respectivement à des températures différentes, caractérisé en ce qu'il comprend un circuit électrique de commande de régulation permettant une production en alternat du froid dans ces compartiments, et donnant une priorité limitée au compartiment le moins froid (5, 20) de cet ensemble (1, 19), et constitué de deux parties, une première partie ayant un thermostat (45) du compartiment le plus froid (6, 21) du type à fermeture, monté en série avec le motocompresseur (3, 24) aux bornes d'une source électrique, et une deuxième partie ayant en série un thermostat (46) du compartiment le moins froid (5, 20) du type à fermeture, un cycleur (47) constitué par un interrupteur dont l'ouverture à effet retardé est commandée par le courant traversant ce cycleur et dont le retour à la fermeture est automatique, et le dispositif de blocage et de déblocage de production frigorifique (15, 26-36), cette dernière partie étant montée en parallèle aux bornes du motocompresseur (3, 24).

10. Ensemble selon la revendication 9, caractérisé en ce qu'il comprend un cycleur (47) constitué par un interrupteur à bilame à résistance chauffante parcourue par le courant traversant ce cycleur.

11. Ensemble selon la revendication 9, caractérisé en ce qu'il comprend un cycleur (47) constitué par un interrupteur commandé par un dispositif de cyclage électronique.

12. Ensemble selon l'une des revendications 1 à 4, caractérisé en ce qu'il comprend un échangeur thermique (50) constitué d'un premier circuit constituant le premier dispositif d'évaporation (12, 29) du circuit primaire et d'un second circuit constituant le condenseur (17, 34) du circuit secondaire, accolés sur les deux faces opposées d'une plaque d'échange thermique (55).

13. Ensemble selon la revendication 12, caractérisé en ce que l'échangeur thermique (50) est formé de trois feuilles de métal superposées, soudées ensemble, les feuilles extérieures (54, 56) ayant des formes permettant de constituer respectivement le premier dispositif d'évaporation (12, 29) du circuit primaire et le condenseur (17, 34) du circuit secondaire entre chacune d'elles et la feuille centrale (55).

14. Ensemble selon l'une des revendications 12 et 13, caractérisé en ce que l'un au moins des circuits (12, 29-17, 34) constitutifs de l'échangeur thermique est du type nid d'abeilles.

15. Ensemble selon l'une des revendications 12 et 13, caractérisé en ce que l'un au moins des circuits (12, 17-29, 34) constitutifs de l'échangeur thermique comporte des canaux de circulation s'étendant sur au moins une partie de la surface de cet échangeur.

16. Ensemble selon la revendication 12, caractérisé en ce que l'échangeur thermique (50) est sous la forme d'un serpentin (58) constitué d'un tube jumelé (59), plié en accordéon, ce tube jumelé formant respectivement le premier dispositif d'évaporation (12, 29) du circuit primaire et le condenseur (17, 34) du circuit secondaire.

17. Ensemble selon la revendication 12, caractérisé en ce que l'échangeur (50) est sous la forme d'un serpentin (60) constitué de deux tubes concentriques (61, 62) pliés en accordéon, ces deux tubes concentriques (61, 62) formant respectivement le premier dispositif d'évaporation (12, 29) du circuit primaire et le condenseur (17, 34) du circuit secondaire.

18. Ensemble selon la revendication 17, caractérisé en ce qu'il comprend, dans l'échangeur (50), des tubes concentriques (61, 62) séparés entre eux par des ailettes (63).

**Claims**

1. A cooling unit with compartments at different temperatures, controlled by independent thermostatic devices and cooled by a coolant circuit (2, 23) comprising a pressure reduction capillary tube and a single motor compressor (3, 24), with a primary circuit in which pressure reduction is obtained by a capillary tube, the unit comprising a first evaporation device functioning as heat exchanger (12, 29) and conceived to cool a first compartment (6, 21) via a secondary circuit (16, 33) having a condenser (17, 34) and an evaporator (18, 35), the condenser (17, 34) being thermally coupled to said evaporation device (12, 29) and a refrigerant fluid circulating by gravity in this device, the evaporator (18, 35) thereof being located in the first compartment by which measure a heat transport is obtained through a heat valve effect, if the temperature of this evaporation device (12, 29) is lower than that of the first compartment (6, 21) whereas any heat transfer is avoided in the opposite case, and at least one second evaporation device in the form of an evaporator (14, 31) conceived to cool at least one second compartment (5, 20), and at least one device to block and to release the cold production in one of the compartments, characterized in that the secondary circuit is conceived to cool the first compartment (6, 21) to which it is associated, down to a temperature which is lower than that obtained in the second compartment(s) (5, 20), to which the second evaporation device is associated, and that the blocked state of the device for blocking and releasing stops the cold production in the second compartment(s) at higher temperature, thus allowing the cold production in the first compartment at lower temperature, whereas its released state allows the cold production in the second compartment(s) at higher temperature, thereby stopping the cold production in the first compartment at lower temperature.

2. A unit according to claim 1, characterized in that it comprises several compartments at higher temperatures (5, 20) which might be different from one another, these compartments being each cooled by an evaporation device (14, 31) comprising a device for blocking and releasing the cold production (15, 26-36).

3. A unit according to claim 1, having two compartments (5, 6) and in which the primary circuit of the coolant circuit (2) is provided with a motor compressor (3), a condenser (7) and a filter-dehydrator (8) mounted in series, characterized in that it comprises in the primary circuit of the coolant circuit (2) on the one hand in series with said motor compressor (3), said condenser (7) and said filter-dehydrator (8) a principal capillary tube (9), an auxiliary capillary tube (10), the first evaporation device (12) operating as heat exchanger and conceived to cool the first compartment at lower temperature (6), and on the other hand in parallel with the auxiliary capillary tube (10) the second evaporation device (14), furnishing coolant energy to the second compartment at higher temperature (5), and on the other hand a device for blocking and releasing the coolant energy production in the form of an electrovalve (15) arranged at the input of said second evaporation device (14).

4. A unit according to claim 1 having two compartments (20, 21) and in which the primary circuit of the coolant circuit (23) is provided with a motor compressor (24), a condenser (25), a filter-dehydrator (27), a capillary tube (28) mounted in series, characterized in that it comprises in the primary circuit of the coolant circuit (23), on the one hand, in series with said motor compressor (24), condenser (25), filter-dehydrator (27), capillary tube (28), the first evaporation device (29) operating as heat exchanger and being conceived to cool the first compartment at lower temperature (21) of the unit (19), and the second evaporation device supplying coolant energy to the second compartment at higher temperature (20), and, on the other hand, a device for blocking and releasing the production of coolant energy located at the condenser outlet and shaped as a blind tube, this device being constituted by a trap container (26) and a heating resistor (36).

5. A unit according to one of claims 3 and 4, having two compartments maintained respectively at different temperatures through independent regulation means, characterized in that it comprises an electric regulation circuit controlling an alternative production of coolant energy in these compartments and giving a priority of coolant energy production to the colder compartment (6, 21) of this unit (1, 19), this circuit being constituted by two parts, a first part having a closing thermostat (37) in the compartment (5, 20) which is less cold, this thermostat having a constant resetting temperature and being arranged in series with the motor compressor (3, 24) at the terminals of an electric source, and a second part formed of an assembly in which the device for blocking and releasing the coolant energy production (15, 26-36) and an opening thermostat (38) of the colder compartment (6, 21) are arranged in series and mounted parallely to the terminals of said motor compressor (3, 24).

6. A unit according to one of claims 3 und 4, having two compartments maintained respectively at different temperatures through independent regulations, characterized in that it comprises an electric control circuit allowing the regulation of the alternative production of coolant energy in these compartments and giving a priority of production to the compartment (5, 20) of said assembly (1, 19) which is less cold, this circuit being constituted by two parts, a first part having a closing thermostat (39) of the colder compartment (6, 21) mounted in series with the motor compressor (3, 24) across the terminals of an electric source, and a second part formed by an assembly having in series the device for blocking and releasing the coolant energy production (15, 26-36) and a closing thermostat (40) of the compartment (5, 20) which is less cold, this assembly being connected in parallel to the terminals of said motor compressor (3, 24).

7. A unit according to one of claims 3 and 4, having two compartments maintained respectively at different temperatures through independent regulations, characterized in that it comprises an electric control circuit permitting the regulation of an alternative coolant energy production in these compartments and giving limited priority to the compartment (5, 20) of this assembly (1, 19) which is less cold, this circuit being constituted by three parts, a first part having a closing thermostat (41) of the colder compartment (6, 21) arranged in series with the motor compressor (3, 24) at the terminals of an electric source, a second part formed by an assembly having in series a closing thermostat (42) of the compartment (5, 20) which is less cold, the blocking and releasing device for the coolant production (15, 26-36) and an auxiliary opening contact (44) of this thermostat (41) in the colder compartment (6, 21), this assembly being connected in parallel to the terminals of the motor compressor (3, 24), and a third part formed by an assembly having in series the thermostat (42) of the compartment (5, 20) which is less cold and a resistance (43) for heating the sensitive element of the thermostat (41) in the colder compartments (6, 21), this assembly being connected to the terminals of said electric source.

8. A unit according to claim 7, characterized in that it comprises in the electric control and regulation circuit a switch which is mounted parallelly to the terminals of the auxiliary contact (44), the control of which is associated to the control of the start of continuous coolant energy generation allowing the deep freezing operation.

9. A unit according to one of claims 3 and 4, having two compartments maintained respectively at different temperatures, characterized in that it comprises an electric control circuit allowing the regulation of an alternative production of coolant energy in these compartments and giving a limited priority to the compartment (5, 20) of this unit (1, 19) which is less cold, this circuit being constituted by two parts, a first part having a closing thermostat (45) of the colder compartment (6, 21) in series with the motor compressor (3, 24) at the terminals of an electric source, and a second part having in series a closing thermostat (46) of the compartment (5, 20) which is less cold, a periodic switch (47) constituted by a switch, the delayed opening of it being controlled by the current passing through this periodic switch, whereas the return to the closing state is automatic, and the device for blocking and releasing the production of the coolant energy (15, 26-36), this last mentioned part being connected in parallel to the terminals of the motor compressor (3, 24).

10. A unit according to claim 9, characterized in that it comprises a periodic switch (47) constituted by a bimetallic strip associated to a heating resistor which is traversed by the current passing through this switch.

11. A unit according to claim 9, characterized in that it comprises a periodic switch (47) constituted by a switch which is controlled by an electronic cycling device.

12. A unit according to one of claims 1 to 4, characterized in that it comprises a heat exchanger (50) constituted by a first circuit constituting the first evaporation device (12, 29) of the primary circuit, and a second circuit constituting the condenser (17, 34) of the secondary circuit, these elements being applied to two opposite surfaces of a heat exchanger plate (55).

13. A unit according to claim 12, characterized in that the heat exchanger (50) is composed of three sandwiched metal sheets which are welded together, the outer sheets (54, 56) being shaped in order to allow the first evaporation device (12, 29) of the primary circuit and the condenser (17, 34) of the secondary circuit to be constituted between one respective of these sheets and the central sheet (55).

14. A unit according to one of claims 12 and 13, characterized in that at least one of the circuits (12, 29-17, 34) which constitute the heat exchanger is of the honeycomb type.

15. A unit according to one of claims 12 and 13, characterized in that at least one of the circuits (12, 17-29, 34) constituting the heat exchanger includes circulation channels which extend over at least a part of the surface of this exchanger.

16. A unit according to claim 12, characterized in that the heat exchanger (50) is constituted by a serpent (58) made of a twin tube (59) which is bent in an accordeon shape, that twin tube constituting respectively the first evaporation device (12, 29) of the primary circuit and the condenser (17, 34) of the secondary circuit.

17. A unit according to claim 12, characterized in that the exchanger (50) is constituted by a serpent (60) of two concentric tubes (61, 62) bent in an accordeon shape, these two concentric tubes (61, 62) constituting respectively the first evaporation device (12, 29) of the primary circuit and the condenser (17, 34) of the secondary circuit.

18. A unit according to claim 17, characterized in that it comprises in the exchanger (50) concentric tubes (61, 62) which are mutually separated by fins (63).

**Patentansprüche**

1. Kühleinheit mit Fächern unterschiedlicher Temperaturen, die von unabhängigen Thermostatvorrichtungen geregelt werden, wobei die Fächer von einem Kühlkreis (2, 23) gekühlt werden, der eine Kapillarstrecke zur Entspannung aufweist und einen einzigen Motorkompressor (3, 24) enthält, mit einem Primärkreis vom Typ Kapillarentspannung, wobei die Einheit enthält eine erste Verdampfungsvorrichtung (12, 29), die über Wärmeaustausch betrieben wird und ein erstes Fach (6, 21) über einen Sekundärkreis (16, 33) mit Kondensator (17, 34) und Verdampfer (18, 35) kühlen soll, wobei der Kondensator in thermischer Verbindung mit dieser Verdampfungsvorrichtung (12, 29) steht und in dem Sekundärkreis ein Kühlmittel mittels Schwerkraft umläuft und wobei der Verdampfer (18, 35) im ersten Fach liegt, was durch einen Thermoventileffekt einen Wärmeübergang bewirkt, wenn die Temperatur dieser Verdampfungsvorrichtung (12, 29) tiefer als die des ersten Fachs (6, 21) liegt, und jeglichen Wärmeübergang im entgegengesetzten Fall verhindert, und mindestens eine zweite Verdampfungsvorrichtung in Form eines Verdampfers (14, 31), der mindestens ein zweites Fach (5, 20) kühlen soll, und mindestens eine Vorrichtung zur Blockierung und Entblockierung der Kälteerzeugung in einem der Fächer, dadurch gekennzeichnet, daß der Sekundärkreis zur Kühlung des ersten Fachs (6, 21), dem er zugeordnet ist, mit einer tieferen Temperatur als die, die in dem oder den zweiten Fächern (5, 20) erhalten wird, denen die zweite Verdampfungsvorrichtung zugeordnet ist, und daß der Blockierzustand der Vorrichtung zur Blockierung und Entblockierung die Kälteerzeugung in dem oder den zweiten Fächern mit der höheren Temperatur unterbricht und auf diese Weise die Kälteerzeugung im ersten Fach mit der tieferen Temperatur ermöglicht, während sein entblockierter Zustand die Kälteerzeugung in dem oder den zweiten Fächern mit höherer Temperatur zuläßt, während die Kälteerzeugung im ersten Fach mit der tieferen Temperatur unterbrochen ist.

2. Einheit nach Anspruch 1, dadurch gekennzeichnet, daß sie mehrere Fächer (5, 20) mit höheren Temperaturen besitzt, die voneinander unterschiedlich sein können, wobei jedes dieser Fächer durch eine Verdampfungsvorrichtung (14, 31) gekühlt wird und mit einer Vorrichtung zur Blockierung und Entblockierung der Kälteerzeugung (15, 26-36) versehen ist.

3. Einheit nach Anspruch 1, die zwei Fächer (5, 6) enthält und in der der Primärkreis des Kühlkreises (2) einen Motorkompressor (3), einen Kondensator (7) und ein Entwässerungsfilter (8) in Reihe enthält, dadurch gekennzeichnet, daß sie im Primärkreis des Kühlkreises (2) einerseits in Reihe mit dem Motorkompressor (3), dem Kondensator (7), dem Entwässerungsfilter (8) eine Hauptkapillarstrecke (9), eine Hilfskapillarstrecke (10) enthält, wobei die erste Verdampfungsvorrichtung (12) als Wärmetauscher wirkt und das erste Fach mit der tieferen Temperatur (6) kühlen soll, und andererseits parallel zur Hilfskapillarstrecke (10) die zweite Verdampfungsvorrichtung (14), die Kälte in das zweite Fach mit der höheren Temperatur (5) liefert, und andererseits eine Vorrichtung zur Blockierung und zur Entblockierung der Kälteproduktion in Form eines am Eingang dieser zweiten Verdampfungsvorrichtung (14) liegenden Elektroventils (15) aufweist.

4. Einheit nach Anspruch 1, die zwei Fächer (20, 21), enthält und in der der Primärkreis des Kühlkreises (23) einen Motorkompressor (24), einen Kondensator (25), ein Entwässerungsfilter (27) und eine Kapillarstrecke (28) in Reihe aufweist, dadurch gekennzeichnet, daß sie im Primärkreis des Kühlkreises (23) einerseits in Reihe mit Motorkompressor (24), Kondensator (25), Entwässerungsfilter (27), Kapillarstrecke (28) die erste Verdampfungsvorrichtung (29) aufweist, die als Wärmetauscher wirkt und dazu bestimmt ist, das erste Fach mit der tieferen Temperatur (21) der Einheit (19) zu kühlen, sowie die zweite Verdampfungsvorrichtung aufweist, die Kälte an das zweite Fach mit höherer Temperatur (20) liefert, und andererseits am Ausgang des Kondensators (25) und als Sackrohr eine Vorrichtung zur Blockierung und Entblockierung der Kälteerzeugung besitzt, die aus einem Fallenbehälter (26) mit einem Heizwiderstand (36) besteht.

5. Einheit nach einem der Ansprüche 3 und 4 mit zwei Fächern, die je mit unabhängigen Regelungen auf unterschiedlichen Temperaturen gehalten werden, dadurch gekennzeichnet, daß sie einen elektrischen Regelkreis aufweist, der eine Kälteerzeugung im Wechselbetrieb in diesen Fächern steuert und einen Vorrang der Kälteerzeugung für das kältere Fach (6, 21) der Einheit (1, 19) zukommen läßt, wobei der elektrische Kreis aus zwei Teilen besteht, nämlich einem ersten Teil mit einem Thermostat (37) für das weniger kalte Fach (5, 20) vom Schließtyp und mit einer konstanten Wiedereinschalttemperatur, der in Reihe mit dem Motorkompressor (3, 24) an den Klemmen einer Stromquelle liegt, und einem zweiten Teil, der in Reihe die Vorrichtung zur Blockierung und Entblockierung der Kälteerzeugung (15, 26-36) und einen Thermostat (38) für das kältere Fach (6, 21) vom Öffnungstyp aufweist, die parallel zu den Klemmen des Motorkompressors (3, 24) angeordnet sind.

6. Einheit nach einem der Ansprüche 3 und 4 mit zwei Fächern, die mit unabhängigen Regelungen je auf einer anderen Temperatur gehalten werden, dadurch gekennzeichnet, daß sie einen elektrischen Steuerkreis zur Regelung enthält, der eine Kälteerzeugung im Wechselbetrieb zwischen den Fächern erlaubt und den Vorrang in der Kälteerzeugung dem weniger kalten Fach (5, 20) dieser Einheit (1, 19) zukommen läßt, wobei dieser Kreis aus zwei Teilen besteht, nämlich einem ersten Teil mit einem Thermostat (39) für das kältere Fach (6, 21) vom Schließtyp, der in Reihe mit dem Motorkompressor (3, 24) an den Klemmen der Stromquelle liegt, und einem zweiten Teil, der in Reihe die Vorrichtung zur Blockierung und Entblockierung der Kälteerzeugung (15, 26-36) und einen Thermostat (40) für das weniger kalte Fach (5, 20) vom Schließtyp enthält, die parallel zu den Klemmen des Motorkompressors (3, 24) angeordnet sind.

7. Einheit nach einem der Ansprüche 3 und 4 mit zwei Fächern, die mithilfe unabhängiger Regelungen auf unterschiedlichen Temperaturen gehalten werden, dadurch gekennzeichnet, daß sie einen elektrischen Steuerkreis zur Regelung enthält, der eine Kälteerzeugung im Wechselbetrieb in den Fächern erlaubt und einen begrenzten Vorrang dem weniger kalten Fach (5, 20) der Einheit (1, 19) zukommen läßt, wobei der Kreis aus drei Teilen besteht, nämlich einem ersten Teil mit einem Thermostat (41) für das kältere Fach (6, 21) vom Schließtyp, der in Reihe mit dem Motorkompressor (3, 24) an den Klemmen einer Stromquelle liegt, einem zweiten Teil, der einen Thermostat (42) für das weniger kalte Fach (5, 20) vom Schließtyp, die Vorrichtung zur Blockierung und Entblockierung der Kälteerzeugung (15, 26-36) und einen Hilfskontakt (44) des Thermostaten (41) für das kältere Fach (6, 21) vom Öffnungstyp in Reihe enthält, die parallel an den Klemmen des Motorkompressors (3, 24) angeordnet sind, und einem dritten Teil, in dem der Thermostat (42) des weniger kalten Fachs (5, 20) und ein Heizwiderstand (43) für das empfindliche Element des Thermostaten (41) für das kältere Fach (6, 21) in Reihe liegen und an die Klemmen der Stromquelle angeschlossen sind.

8. Einheit nach Anspruch 7, dadurch gekennzeichnet, daß im elektrischen Steuerkreis für die Regelung ein Unterbrecher angeordnet ist, der parallel zu den Klemmen des Hilfskontakts (44) liegt, dessen Steuerung der Einschaltsteuerung des Dauerbetriebs für die Einfrieroperation zugeordnet ist.

9. Einheit nach einem der Ansprüche 3 und 4 mit zwei Fächern, die je auf unterschiedlichen Temperaturen gehalten werden, dadurch gekennzeichnet, daß sie einen elektrischen Steuerkreis zur Regelung der Kälteproduktion im Wechselbetrieb in diesen Fächern ermöglicht und einen begrenzten Vorrang dem weniger kalten Fach (5, 20) der Einheit (1, 19) zukommen läßt, wobei der Kreis aus zwei Teilen besteht, nämlich einem ersten Teil mit einem Thermostat (45) für das kältere Fach (6, 21) vom Schließtyp, der in Reihe mit dem Motorkompressor (3, 24) an den Klemmen einer Stromquelle liegt, und einem zweiten Teil, der in Reihe einen Thermostat (46) für das weniger kalte Fach (5, 20) vom Schließtyp, einen Zyklusschalter (47) bestehend aus einem Unterbrecher, dessen Öffnen mit verzögerter Wirkung vom den Zyklusschalter durchquerenden Strom gesteuert wird und dessen Rückkehr in den Schließzustand automatisch ist, und die Vorrichtung zur Blockierung und Entblockierung der Kälteerzeugung (15, 26-36) enthält, wobei dieser letztere Teil parallel an den Klemmen des Motorkompressors (3, 24) liegt.

10. Einheit nach Anspruch 9, dadurch gekennzeichnet, daß sie einen Zyklusschalter (47) enthält, der von einem Bimetallunterbrecher mit Heizwiderstand gebildet wird, wobei der Widerstand von dem durch den Zyklusschalter fließenden Strom durchflossen wird.

11. Einheit nach Anspruch 9, dadurch gekennzeichnet, daß der Zyklusschalter (47) einen Unterbrecher aufweist, der von einer elektronischen Zykliervorrichtung gesteuert wird.

12. Einheit nach einem der Ansprüche 1 bis 4, dadurch gekennzeichnet, daß sie einen Wärmetauscher (50) enthält, der von einem ersten die erste Verdampfungsvorrichtung (12, 29) des Primärkreises bildenden Kreis und einem zweiten Kreis gebildet wird, der den Kondensator (17, 34) des Sekundärkreises enthält, wobei die beiden Kreise auf die beiden entgegengesetzten Seiten einer Wärmetauscherplatte (55) aufgebracht sind.

13. Einheit nach Anspruch 12, dadurch gekennzeichnet, daß der Wärmetauscher (50) aus drei übereinanderliegenden und zusammengeschweißten Metallblechen besteht, wobei die äußeren Bleche (54, 56) Formen besitzen, die es ermöglichen, die erste Verdampfungsvorrichtung (12, 29) des Primärkreises bzw. den Kondensator (17, 34) des Sekundärkreises zwischen je einem der Bleche und dem zentralen Blech (55) zu bilden.

14. Einheit nach einem der Ansprüche 12 und 13, dadurch gekennzeichnet, daß mindestens einer der Kreise (12, 29-17, 34), die den Wärmetauscher bilden, vom Wabentyp ist.

15. Einheit nach einem der Ansprüche 12 und 13, dadurch gekennzeichnet, daß mindestens einer der den Wärmetauscher bildenden Kreise (12, 17-29, 34) Zirkulationskanäle enthält, die sich über mindestens einen Teil der Oberfläche dieses Wärmetauschers erstrecken.

16. Einheit nach Anspruch 12, dadurch gekennzeichnet, daß der Wärmetauscher (50) die Form einer Schlange (58) besitzt, die aus einem akkordeonmäßig gefalteten Zwillingsrohr (59) besteht, wobei dieses Zwillingsrohr die erste Verdampfungsvorrichtung (12, 29) des Primärkreises bzw. den Kondensator (17, 34) des Sekundärkreises bildet.

17. Einheit nach Anspruch 12, dadurch gekennzeichnet, daß der Wärmetauscher (50) die Form einer Schlange (60) aus zwei konzentrischen und akkordeonmäßig gefalteten Rohren (61, 62) besitzt, wobei diese beiden konzentrischen Rohre (61, 62) die erste Verdampfungsvorrichtung (12, 29) des Primärkreises bzw. den Kondensator (17, 34) des Sekundärkreises bilden.

18. Einheit nach Anspruch 17, dadurch gekennzeichnet, daß im Wärmetauscher (50) konzentrische Rohre (61, 62) enthalten sind, die gegeneinander durch Rippen (63) auf Abstand gehalten sind.

FIG. 1

0 044 248

FIG. 2

FIG. 3

FIG. 4

FIG. 5

FIG. 6

0 044 248

FIG. 7

FIG. 8

FIG. 9

FIG. 10

4

FIG. 11

FIG. 12

FIG. 13

FIG. 14

FIG. 15